# DEMANDE DE BREVET EUROPEEN

(11) **EP 2 955 792 A2**
(43) Date de publication de la demande: **16.12.2015**
(21) Numéro de dépôt: 15171995.2
(22) Date de dépôt: 12.06.2015
(51) Int. Cl.: H01R 13/193, G01K 7/02

(54) **DOUILLE DE CONTACT ÉLECTRIQUE À EFFORT D'INSERTION RÉDUIT**

(30) Priorité: 12.06.2014 FR 1455365
(71) Demandeur: SOURIAU, 78000 Versailles (FR)
(72) Inventeur: COSTANTINI, Rémi, 77540 NESLES LA GILBERDE (FR)
(74) Mandataire: Ipside

(57) **Abrégé**

L'invention concerne une douille (100) de contact électrique, apte à recevoir un conducteur (110) électrique d'une épaisseur (111) définie, introduit dans ladite douille par une extrémité (125) dite d'introduction et comprenant :
a. un fourreau (120) cylindrique comportant une saignée (121) apte à procurer une souplesse radiale audit fourreau sur une partie de sa longueur ;
b. une lèvre (122) en saillie à l'intérieur du fourreau à l'entrée de l'extrémité (125) d'introduction délimitant une ouverture (129) ;
c. une bague (130), dite de sertissage, apte à coulisser longitudinalement sur la surface extérieure du fourreau, entre une position (135), dite libre, distale de l'extrémité d'introduction et une position (136), dite de sertissage, proximale de l'extrémité (125) d'introduction, apte à rétreindre le fourreau dans sa position de sertissage.

## Description

L'invention concerne une douille de contact électrique à effort d'insertion réduit. L'invention est plus particulièrement, mais non exclusivement, adaptée la réalisation d'un contact, équivalent à un sertissage mécanique, mettant en oeuvre une broche ou une douille fragiles, ou dans des conditions d'encombrement qui ne permettent pas le passage d'un outillage de sertissage ou de soudage, notamment dans le domaine de la connexion des thermocouples.

Le raccordement d'un thermocouple, à un câble de compensation ou un câble d'extension, est préférentiellement réalisé avec des connecteurs de même nature que les câbles connectés, de sorte à ne pas introduire de jonction entre deux matériaux dissimilaires dans le circuit, jonction qui serait susceptible de produire une force électromotrice par un effet thermoélectrique, dit effet Seebeck, et ainsi de fausser les mesures réalisées par ledit thermocouple. Or, les couples de matériaux constituant le thermocouple sont d'une manière générale, fragiles, n'acceptant par les faibles rayons de courbure et présentent de faibles capacités d'accommodation des déformations par élasticité ou plasticité. Ces fils, sont de plus maintenus dans une gaine, notamment une gaine céramique dure, jusqu'à la connexion avec le câble d'extension ou de compensation, ce qui rend délicat l'insertion d'un outillage de soudage ou de sertissage entre lesdits fils, sauf à les dénuder sur une longue distance.

Le document EP 2 157 416 décrit un dispositif adapté à la connexion des extrémités des fils d'un thermocouple avec les extrémités des fils d'un câble d'extension, lequel dispositif comporte une broche et une douille constituées d'un matériau électriquement isolant et comportant chacune deux portions annulaires conductrices, aptes à entrer en contact respectif lorsque la broches est insérée dans la douille. Les extrémités des fils du thermocouple et du câble d'extension sont introduites dans des logements, respectivement de la douille et de la broche, lesquels logements forment des conduits qui guident lesdits fils vers les portions annulaires conductrices avec lesquelles les fils sont en contact électrique. Ce dispositif de l'art antérieur nécessite d'introduire les fils, tant du thermocouple que du câble d'extension dans des conduits au contour sinueux et d'obtenir un contact franc entre les fils et les portions annulaires, sachant que lesdits fils sont fins, cassants et ne sont pas adaptés au suivi de faibles rayons de courbure.

L'invention vise à résoudre les inconvénients de l'art antérieur et concerne à cette fin une douille de contact électrique, apte à recevoir un conducteur électrique d'une épaisseur définie, introduit dans ladite douille par son extrémité d'introduction et comprenant :
a. un fourreau cylindrique comprenant une saignée apte à procurer audit fourreau une souplesse radiale sur une partie de sa long ueur ;
b. une lèvre en saillie à l'intérieur du fourreau à l'entrée de l'extrémité d'introduction délimitant une ouverture d'épaisseur inférieure à l'épaisseur du conducteur électrique ;
c. une bague, dite de sertissage, apte à coulisser longitudinalement sur la surface extérieure du fourreau, entre une position, dite libre, distale de l'extrémité d'introduction et une position, dite de sertissage, proximale de l'extrémité d'introduction apte à rétreindre le fourreau dans sa position de sertissage ;

Ainsi le conducteur électrique est introduit dans le fourreau guidé par la lèvre par un effort longitudinal réduit. Le déplacement de la bague sur le fourreau, resserre le fourreau sur ledit conducteur avec une pression nettement supérieure à la pression résultant de l'écartement élastique du fourreau. Ainsi l'écartement du fourreau lié à l'introduction du conducteur est maintenu dans des valeurs compatibles avec sa capacité d'accommodement élastique ou plastique des déformations. La douille objet de l'invention permet ainsi d'obtenir à la fois une introduction sans effort du conducteur dans le fourreau et une liaison mécanique et électrique complète du conducteur dans le fourreau après sertissage, sans risque de dégradation mécanique du conducteur ou du fourreau même en présence de matériaux fragiles.

L'invention est avantageusement mise en oeuvre selon les modes de réalisation exposés ci-après lesquels sont à considérer individuellement ou selon toute combinaison techniquement opérante.

Avantageusement, la douille objet de l'invention comporte :
d. une gorge sur la surface extérieure du fourreau comportant un épaulement, dit d'arrêt, apte à arrêter la bague de sertissage en position longitudinale de sertissage.

Ainsi, la bague de sertissage, une fois en position de sertissage est maintenue en position longitudinale par l'épaulement de la gorge, ce qui évite tout dessertissage accidentel.

Avantageusement, la surface externe du fourreau comprend :
e. une portion conique s'étendant longitudinalement entre la position libre de la bague et l'épaulement d'arrêt de la gorge.

Cette portion permet un serrage progressif du fourreau par la douille lors du coulissement de la bague et évite d'avoir à pincer le fourreau, pour déplacer la douille.

Selon un autre mode de réalisation, la bague de sertissage est apte à coulisser simultanément sur deux fourreaux. Ainsi, une même bague est utilisable pour le sertissage simultané de plusieurs conducteurs dans plusieurs fourreaux.

L'invention concerne également un ensemble comprenant une douille selon l'un quelconque des modes de réalisation précédents, et un conducteur électrique apte à être introduit dans ladite douille, dans lequel le fourreau et ledit conducteur sont appairés par plage de diamètre et d'épaisseur admissibles, de sorte que les contraintes dans le fourreau, consécutives à son expansion radiale sous l'effet de l'introduction du conducteur, sont inférieures à la limite élastique du matériau constituant ledit fourreau. Ainsi l'ensemble objet de l'invention est particulièrement adapté à la réalisation d'une connexion électrique mettant en oeuvre des matériaux fragiles, tout en assurant une connexion électrique et mécanique efficace du conducteur et de la douille.

Selon un mode de réalisation particulier de la douille objet de l'invention la bague de sertissage est constituée d'un matériau à mémoire de forme apte à se rétreindre radialement lors de son passage à l'état austénitique. Ce mode de réalisation permet, pour une pression de sertissage équivalente de réduire la longueur du fourreau et d'en simplifier la forme tout en évitant le besoin de serrer le fourreau sur le conducteur pour déplacer ladite douille.

Selon un autre mode de réalisation de la douille objet de l'invention, la bague est constituée d'un matériau non électriquement conducteur.

Avantageusement, le fourreau et le conducteur électrique sont constitués du même matériau. Ainsi, aucun élément étranger n'est interposé entre les deux éléments réalisant et contact électrique et la connexion électrique n'entraîne pas la création d'un couple galvanique.

Avantageusement, le matériau constituant le fourreau et le conducteur est un matériau susceptible de constituer un thermocouple en association avec un autre matériau. Ainsi le dispositif de connexion de l'ensemble objet de l'invention est avantageusement utilisé pour la connexion d'un thermocouple à des câbles de compensation ou d'extension sans créer de force électromotrice perturbatrice entre les jonctions.

L'invention concerne également l'utilisation d'une douille selon l'un quelconque des modes de réalisation exposés ci-avant pour la connexion de deux conducteurs introduits dans le fourreau. Ce mode de réalisation permet de sertir entre eux deux conducteurs constitués d'un matériau ou d'un couple de matériaux difficiles à sertir ou à assembler par les techniques de l'art antérieur, notamment par brasage.

Selon un mode de réalisation particulier, adapté à la connexion de deux conducteurs, la douille objet de l'invention comporte :
f. un orifice radial débouchant sur la surface extérieure et à l'intérieur du fourreau

Ce mode de réalisation assure un maintien en position aisé des conducteurs lors du sertissage.

À cette fin l'invention concerne également l'utilisation d'une douille selon ce dernier mode de réalisation pour la connexion de deux conducteurs par contact mécanique entre lesdits conducteurs, dont l'un est introduit par ledit orifice radial.

L'invention est exposée ci-après selon ses modes de réalisation préférés, nullement limitatifs, et en référence aux figures 1 à 5 dans lesquelles :
- la figure 1 montre selon une vue en coupe longitudinale, un exemple de réalisation d'une douille selon l'invention, figure 1A selon une configuration libre de toute introduction d'un conducteur dans ladite douille, figure 1B en cours d'introduction d'un conducteur dans le fourreau figure 1C lors du sertissage dudit conducteur dans le fourreau, les déformations ayant été amplifiées pour faciliter la compréhension ;
- la figure 2 représente, selon la même coupe que la figure 1, un exemple de réalisation de la douille objet de l'invention dans lequel la bague de sertissage est commune à plusieurs fourreaux ;
- la figure 3 montre selon la même coupe que les figures 1 et 2 un mode de réalisation de la douille objet de l'invention, utilisant une bague de sertissage constituée d'un matériau à mémoire de forme, figure 3A, lors de l'introduction du conducteur dans le fourreau, figure 3B, lors du sertissage ;

- la figure 4 représente un exemple d'utilisation d'une douille objet de l'invention pour la jonction de deux connecteurs dans un même fourreau ;
- et la figure 5 est une vue en coupe longitudinale, d'un troisième mode de réalisation de la douille objet de l'invention, adapté à la connexion de deux conducteurs, figure 5A en position libre, figure 5B en position de sertissage et la figure 5C représente le fourreau seul correspondant à ce mode de réalisation.

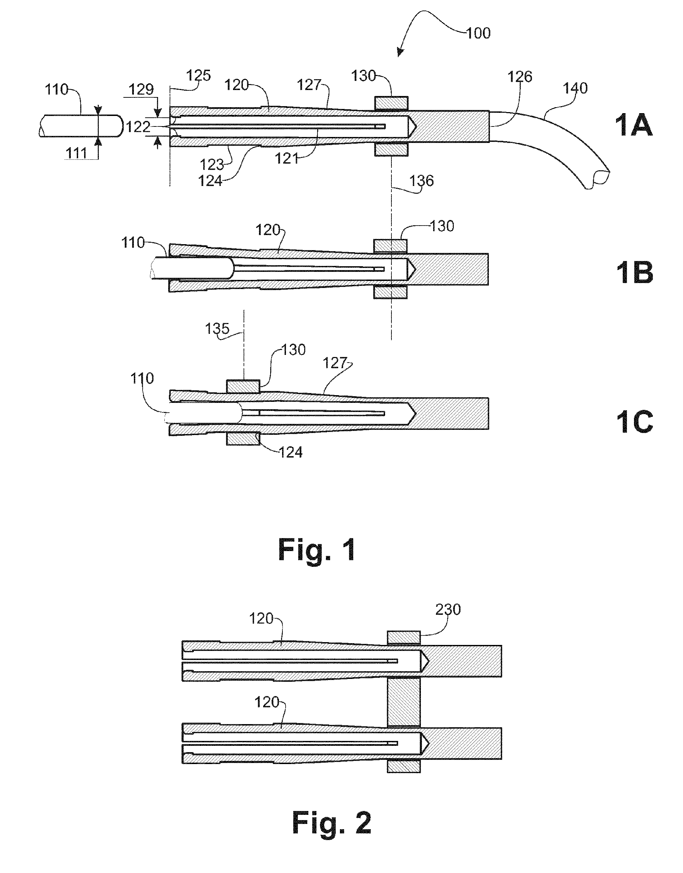

Figure 1, selon un exemple de réalisation la douille (100) objet de l'invention comprend un fourreau (120) lisse, c'est-à-dire exempt de filetage, fendu par une ou plusieurs fentes (121) longitudinales aptes à lui conférer des capacités de déformation radiales. Ledit fourreau (120) comporte une extrémité (125) longitudinale, dite d'introduction, comportant une lèvre (122) faisant saillie radiale vers l'intérieur dudit fourreau (120). L'autre extrémité (126) longitudinale du fourreau est, selon cet exemple de réalisation, connectée à un conducteur (140) par tout moyen, notamment par soudure. La douille objet de l'invention, comporte une bague (130) apte à se déplacer sur la surface extérieure du fourreau (120) et relativement à celui-ci, entre une position (136) longitudinale, dite libre, distale de l'extrémité (125) d'introduction et une position (135), dite de sertissage, proximale de l'extrémité d'introduction. Le fourreau comporte sur sa surface externe une gorge (123) comprenant un épaulement (124) apte à arrêter la bague (130) en translation lorsque ladite bague se trouve en position de sertissage. Selon cet exemple de réalisation, la surface externe du fourreau comprend une partie (127) conique s'étendant longitudinalement entre la position (136) dite libre et l'entrée de la gorge (123). Le déplacement de la bague est réalisée le long du fourreau selon une translation simple, ainsi ce déplacement n'introduit pas d'effort de torsion qui risquerait d'endommager les conducteurs (110, 120).

Figure 1A, la douille objet de l'invention permet de réaliser la connexion électrique entre un conducteur (110) et le fourreau (120), l'épaisseur ou le diamètre (111) dudit conducteur étant égale ou supérieure à l'espace (129) ouvert entre les lèvres (122) du fourreau à l'extrémité d'introduction. Selon cet exemple de réalisation, le fourreau (120) est constitué d'un matériau électriquement conducteur.

Figure 1B, la bague étant en position longitudinale libre, l'introduction du conducteur (110) dans le fourreau provoque l'écartement des lèvres (122). Cet écartement est d'autant plus facile que l'épaisseur (111) du conducteur est proche de l'ouverture (129) à l'extrémité (125) d'introduction du fourreau, que le nombre de fentes (121) longitudinales dudit fourreau est élevé et que lesdites fentes se prolongent sur une grande longueur longitudinale. En pratique le fourreau selon ce mode de réalisation, comprend de 1 à 8 fentes délimitant des griffes qui, lorsque la bague est en position de sertissage, pincent le conducteur (110) entre les lèvres, sans pénétrer dans ledit conducteur. Ainsi l'ensemble constitué de la douille (100) et du conducteur (110) est configurable de sorte que l'effort d'introduction dudit conducteur dans le fourreau soit très faible, afin d'éviter tout risque de flambement ou de rupture dudit conducteur sous l'effet de cet effort d'introduction. Ainsi, la douille objet de l'invention permet l'introduction aisée dans le fourreau d'un conducteur (110) de nature fragile, ou encore très souple.

Figure 1C, une fois le conducteur (110) introduit dans le fourreau (120), la bague (130) est déplacée en translation de la position (136) libre à la position (135) de sertissage, et resserre le fourreau (120) sur le conducteur, assurant ainsi une liaison mécanique complète par serrage entre ledit conducteur (110) et le fourreau (120). La longueur des fentes (121) et la progressivité de la partie (127) conique du fourreau permettent la réalisation de la douille dans un matériau aux capacités de déformation élastique limitée, comme les matériaux utilisés pour la constitution d'un thermocouple. Lorsque ladite bague (130) arrive dans la gorge extérieure du fourreau, le retour élastique de la partie conique (127) du fourreau, comprise entre la position longitudinale (136) libre et l'épaulement (124) de la gorge, empêche le retour de la bague (130) vers la position libre, ledit épaulement (124) faisant office de butée. Ainsi la douille objet de l'invention permet de réaliser une liaison complète entre un conducteur et le fourreau, tout en permettant un effort d'introduction très faible du conducteur dans le fourreau et une latitude importante de positionnement longitudinal relatif du conducteur (110) et du fourreau (120). Selon la hauteur de l'épaulement (124) la liaison est démontable avec ou sans outil en ramenant la bague (130) dans la position (136) dite libre. Ainsi en pinçant plus ou moins le fourreau (120) entre ladite position (136) libre et l'épaulement (124), la butée réalisée par cet épaulement s'efface, autorisant le recul de la bague vers la position (136) libre.

Ce mode de réalisation est particulièrement adapté à la connexion entre l'un des câbles (140) d'un thermocouple et un câble (110) de compensation ou d'extension. Selon cet exemple de réalisation, le fourreau (120), le conducteur (110) et le câble sont constitués du même matériau, la bague étant par exemple constituée d'un matériau non conducteur électriquement. À titre d'exemples non limitatifs, le conducteur et le fourreau sont constitués tous deux, de fer (Fe), d'un alliage de nickel (Ni) et de chrome (Cr) dit « chromel », de cuivre (Cu), d'un alliage de nickel (Ni) et de cuivre (Cu), dit « constantan », d'un alliage de nickel (Ni), d'aluminium (Al) et de silicium (Si), dit « alumel », d'un alliage de nickel (Ni), de chrome (Cr) et de silicium (Si), dit « nicrosil », d'un alliage de nickel (Ni), de silicium (Si) et de magnésium (Mg) dit « nisil », de platine (Pt) ou d'un alliage de platine (Pt) et de rhodium (Rh). La plupart de ces matériaux ont un comportement fragile de sorte que l'ouverture (129) du fourreau est très proche de l'épaisseur ou du diamètre (111) du conducteur de sorte que les contraintes induites par la déformation dudit fourreau lors de l'introduction du conducteur restent dans des valeurs appropriées.

Figure 2, selon un exemple de réalisation, la bague (230) de sertissage est commune à plusieurs fourreaux et permet de réaliser simultanément le sertissage de plusieurs connexions.

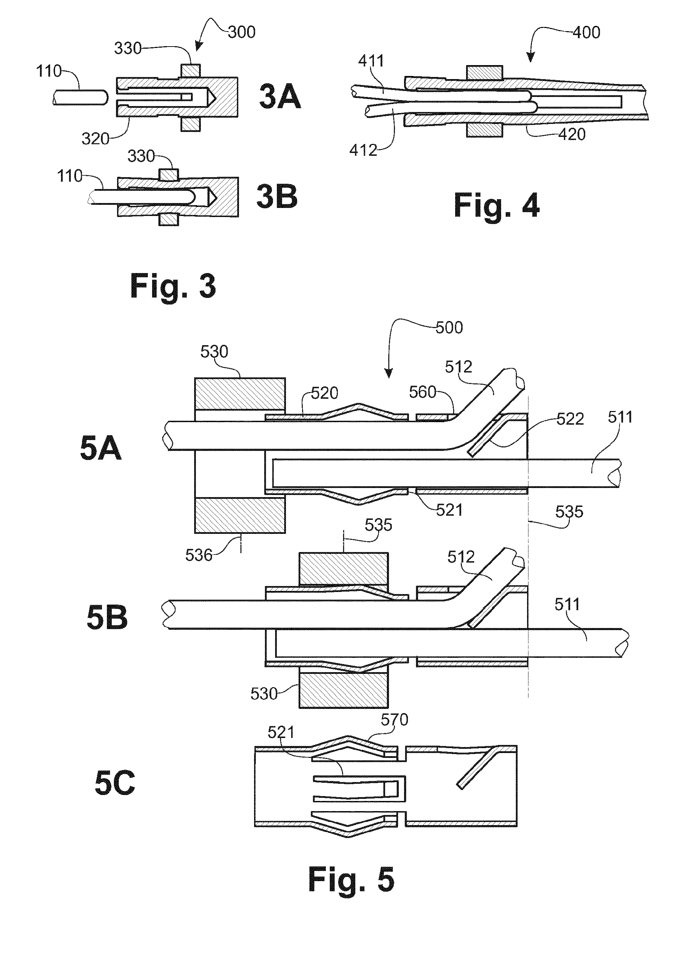

Figure 3, selon un autre exemple de réalisation de la douille (300) objet de l'invention, la bague (330) est constituée d'un matériau au mémoire de forme. Un matériau à mémoire de forme est un matériau subissant une transition de phase à l'état solide entre un état, dit martensitique, stable à basse température et un état, dit austénitique stable à haute température et qui, lorsqu'il est déformé de manière permanente à l'état martensitique depuis une forme d'origine, reprend cette forme originale lorsqu'il est porté à l'état austénitique et la conserve après son retour à l'état martensitique. D'autres variantes de mémoire de forme sont possibles sans sortir du cadre de l'invention, notamment en induisant la déformation permanente à basse température par l'induction de martensite métastable par déformation d'une austénite également métastable. Des informations détaillées à propos de l'effet mémoire dans les matériaux métalliques et non métalliques sont décrites dans :
« Shape Memory Effect in Alloys - Proceedings of the International Symposium on Shape Memory Effects and Applications, Toronto, Ontario, Canada, 19 au 22 mai, 1975, Jeff Perkins Éditeur, Plenum Press, New York »

Figure 3A, selon cet exemple de réalisation, l'épaisseur du conducteur (110) est proche voire inférieure à l'ouverture d'entrée du fourreau. Le diamètre intérieur de la bague (330), radialement expansée et dans l'état martensitique, est proche, voire légèrement supérieur au diamètre extérieur du fourreau (320) de sorte que le conducteur (110) est introduit sans effort dans le fourreau (320).

Figure 3B, la bague (330) étant amenée jusque dans la gorge du fourreau, ladite bague (330) est chauffée, par exemple au moyen d'un pistolet à air chaud, afin de transformer le matériau la constituant vers l'état austénitique. Cette transition de phase provoque l'effet mémoire de la bague et son rétreint sur le fourreau (320) réalisant ainsi le sertissage du conducteur (110) dans ledit fourreau (320).

Figure 4, selon un autre exemple de réalisation de la douille (400) objet de l'invention, le fourreau (420) est utilisé pour réaliser la jonction entre deux conducteurs (411,412). Selon ce mode de réalisation le fourreau (420) est constitué indifféremment d'un matériau électriquement isolant ou d'un matériau électriquement conducteur.

Figure 5, selon un autre exemple de réalisation de la douille (500) objet de l'invention, figure 5C, le fourreau (520) comporte une pluralité des saignées (521) longitudinales délimitant une pluralité de griffes (570) élastiques.

Figure 5A, à son extrémité (525) d'introduction le fourreau comporte une lèvre (522) apte à guider un premier conducteur (511). Le fourreau (520) comprend également un orifice (560) radial, pour l'introduction d'un second (512) conducteur, guidé par la face opposée de la même lèvre (522). Lorsqu'elle se trouve en position (536) libre, la bague (530) ne contraint par le fourreau.

Figure 5B, lorsque la bague (530) est déplacée longitudinalement en position (535) de sertissage, elle retreint les griffes (570) sur les deux conducteurs (511,512) réalisant un contact franc, à la fois électrique et mécanique entre lesdits conducteurs. Ainsi le fourreau (520) et la bague (530), selon ce mode de réalisation sont par exemple tous deux constitués d'un matériau électriquement isolant.

Selon une variante (non représentée) de ce dernier mode de réalisation, la bague de sertissage est commune à plusieurs fourreaux.

La description ci-avant et les exemples de réalisation montrent que l'invention atteint les objectifs visés, en particulier, elle permet d'assurer la connexion électrique et l'immobilisation mécanique d'un conducteur, démontables et sans soudure, sans contrainte mécanique d'installation. Elle permet ainsi de simplifier la connexion des câble de compensation ou d'extension d'un thermocouple sans créer de jonction supplémentaire susceptible de fausser les mesure. Le sertissage étant réalisé, soit par les propriétés de mémoire de forme de la bague, soit par un simple mouvement de translation de la bague selon un chargement très progressif, réglé par la conicité du fourreau, les risque de dégradation lors du sertissage du ou des conducteurs ainsi connectés sont réduits.

## Revendications

1. Douille (100, 300, 400, 500) de contact électrique, apte à recevoir un conducteur (110, 511, 512, 411, 412) électrique d'une épaisseur (111) définie, introduit dans ladite douille par une extrémité (125, 525) dite d'introduction et comprenant :
a. un fourreau (120, 320, 420, 520) cylindrique comportant une saignée (121, 521) apte à procurer une souplesse radiale audit fourreau sur une partie de sa longueur ;
b. une lèvre (122, 522), en saillie à l'intérieur du fourreau, à l'entrée de l'extrémité (125, 525) d'introduction délimitant une ouverture (129) ;
c. une bague (130, 230, 330, 530), dite de sertissage, apte à coulisser longitudinalement sur la surface extérieure du fourreau, entre une position (135, 535), dite libre, distale de l'extrémité d'introduction et une position (136, 536), dite de sertissage, proximale de l'extrémité (125,525) d'introduction, apte à rétreindre le fourreau dans sa position de sertissage.

2. Douille selon la revendication 1, comprenant :
d. une gorge (130, 330) sur la surface extérieure du fourreau comportant un épaulement (124), dit d'arrêt, apte à arrêter la bague (130, 330) de sertissage en position longitudinale de sertissage.

3. Douille selon la revendication 2, dont la surface externe du fourreau comprend :
e. une portion (127) conique s'étendant longitudinalement entre la position libre de la bague et l'épaulement d'arrêt de la gorge.

4. Douille selon la revendication 1, dans laquelle la bague (330) de sertissage est constituée d'un matériau à mémoire de forme apte à se rétreindre radialement lors de son passage à l'état austénitique.

5. Douille selon la revendication 1, dans laquelle la bague est constituée d'un matériau non électriquement conducteur.

6. Douille selon la revendication 1, dans laquelle la bague (230) de sertissage est apte à coulisser simultanément sur deux fourreaux.

7. Douille selon la revendication 1, adaptée à la connexion d'un conducteur (110,411,412) constituant un câble d'extension ou de compensation d'un thermocouple, dans laquelle le fourreau est constitué du même matériau que le conducteur.

8. Douille selon la revendication 6, dans laquelle le fourreau est constitué d'un matériau choisi parmi le fer (Fe), un alliage de nickel (Ni) et de chrome (Cr) dit « chromel », le cuivre (Cu), un alliage de nickel (Ni) et de cuivre (Cu), dit « constantan », un alliage de nickel (Ni), d'aluminium (Al) et de silicium (Si), dit « alumel », un alliage de nickel (Ni), de chrome (Cr) et de silicium (Si), dit « nicrosil », un alliage de nickel (Ni), de silicium (Si) et de magnésium (Mg) dit « nisil », le platine (Pt) ou un alliage de platine (Pt) et de rhodium (Rh).

9. Ensemble comprenant une douille (100, 300) selon la revendication 7, et un conducteur (110) électrique apte à être introduit dans ladite douille, **caractérisé en ce que** le fourreau (120, 320) et ledit conducteur sont appairés par plage de diamètre et d'épaisseur admissibles, de sorte que les contraintes dans le fourreau, consécutives à son expansion radiale sous l'effet de l'introduction du conducteur, sont inférieures à la limite élastique du matériau constituant ledit fourreau.

10. Utilisation d'une douille selon la revendication 1 pour la connexion de deux conducteurs introduits dans le fourreau.

11. Douille selon la revendication 1, comprenant :
f. un orifice (560) radial débouchant sur la surface extérieure et à l'intérieur du fourreau.

12. Douille selon la revendication 10, dans laquelle le fourreau est constitué d'un matériau non électriquement conducteur

13. Utilisation d'une douille selon la revendication 11, pour la connexion de deux conducteurs (511, 512), par contact mécanique entre lesdits deux conducteurs introduits dans le fourreau dont l'un est introduit par ledit orifice (560) radial.
